(19) Europäisches Patentamt
European Patent Office
Office européen des brevets

(11) **EP 3 597 508 A2**

(12) **EUROPEAN PATENT APPLICATION**

(43) Date of publication:
**22.01.2020   Bulletin 2020/04**

(51) Int Cl.:
***B62D 5/04*** *(2006.01)*

(21) Application number: **19186896.7**

(22) Date of filing: **18.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **19.07.2018   JP 2018136093**

(71) Applicant: **JTEKT CORPORATION
Chuo-ku,
Osaka-shi, Osaka 542-8502 (JP)**

(72) Inventors:
• **KAWAMURA, Hiroshi
  Osaka-shi, Osaka 542-8502 (JP)**
• **FUJITA, Yuji
  Osaka-shi, Osaka 542-8502 (JP)**
• **PALANDRE, Xavier Joseph
  Osaka-shi, Osaka 542-8502 (JP)**

(74) Representative: **Winter, Brandl, Fürniss, Hübner, Röss, Kaiser, Polte - Partnerschaft mbB
Patent- und Rechtsanwaltskanzlei
Alois-Steinecker-Strasse 22
85354 Freising (DE)**

(54)  **MOTOR CONTROLLER**

(57)    Provided is a motor controller in which a total motor torque can be changed at a constant rate if maximum torques that can be generated by winding groups of a plurality of systems lose their balance. An upper limit of a first assist control amount ($I_{as1}*$) for a first winding group or a second assist control amount ($I_{as2}*$) for a second winding group may be limited to a value smaller than the original upper limit. In this case, an ECU calculates the first assist control amount ($I_{as1}*$) and the second assist control amount ($I_{as2}*$) so that the first assist control amount ($I_{as1}*$) and the second assist control amount ($I_{as2}*$) reach their upper limits at the same timing relative to changes in absolute values of steering torques ($\tau_1$, $\tau_2$).

FIG. 9

GRAPH A

GRAPH B

GRAPH C

**Description**

BACKGROUND OF THE INVENTION

1. Field of the Invention

The present invention relates to a motor controller.

2. Description of the Related Art

Hitherto, a controller configured to control a motor that is a source of an assist torque to be applied to a steering mechanism of a vehicle is known as described in, for example, Japanese Patent Application Publication No. 2011-195089 (JP 2011-195089 A). The controller controls power supply to a motor including coils of two systems. The controller includes two sets of drive circuits and microcomputers corresponding to the coils of the two systems, respectively. The microcomputers independently control power supply to the coils of the two systems by controlling the respective drive circuits based on a steering torque. The overall motor generates an assist torque obtained by summing up torques generated by the coils of the respective systems.
The motor including the coils of the two systems may fall into a situation in which maximum torques that can be generated by the coils of the respective systems lose their balance. Several phenomena are conceivable as the causes of this situation. For example, if the coil of one of the two systems is overheated, only the power supply to the coil of the system in which the overheating is detected is limited in order to protect the coil. This limitation is conceived as a cause. In this case, only the torque generated by the coil of the system in which the power supply is limited reaches an upper limit. Therefore, the change rate of the assist torque relative to the steering torque changes before and after the timing when the torque generated by the coil of the system in which the power supply is limited reaches the upper limit. There is a concern that the driver feels discomfort in fluctuation of the steering torque, torque ripples, or the like caused along with the change.

SUMMARY OF THE INVENTION

It is one object of the present invention to provide a motor controller in which a total motor torque can be changed at a constant rate even if maximum torques that can be generated by winding groups of a plurality of systems lose their balance.
A motor controller according to one aspect of the present invention includes a control circuit configured to calculate a control amount corresponding to a torque to be generated by a motor including winding groups of a plurality of systems, and independently control, for the respective systems, power supply to the winding groups of the plurality of systems based on individual control amounts obtained by allocating the calculated control amount for the respective systems. The control circuit is configured to calculate the individual control amounts of the plurality of systems so that the individual control amounts of the plurality of systems reach their upper limits at the same timing relative to a change in the torque to be generated by the motor.
According to this structure, even if an upper limit of the individual control amount of one of the plurality of systems is limited to a value smaller than the original upper limit, there is no such case that only the individual control amount of the limited system reaches the upper limit. Thus, a total control amount obtained by summing up the individual control amounts of the plurality of systems can be changed at a constant rate. Accordingly, the motor torque obtained by summing up the torques to be generated by the winding groups of the plurality of systems can be changed at a constant rate.
In the motor controller of the aspect described above, the control circuit may be configured to calculate, for the respective systems, maximum torques to be generated in the winding groups of the plurality of systems, calculate, for the respective systems, ratios of the maximum torques to a total torque obtained by summing up the maximum torques, and calculate the individual control amounts of the respective systems by allocating the control amount at the calculated ratios of the respective systems.
According to this structure, even if the upper limit of the individual control amount of one of the plurality of systems is limited to the value smaller than the original upper limit, the individual control amounts of the plurality of systems reach their upper limits at the same timing.
In the motor controller of the aspect described above, the control circuit may be configured to calculate the maximum torques to be generated in the respective systems based on a map that defines a relationship between a rotation speed of the motor and the torque of the motor. According to this structure, the maximum torques to be generated in the respective systems can easily be determined based on the rotation speed of the motor.
In the motor controller of the aspect described above, the control circuit may include as many individual control circuits as the systems. The individual control circuits are configured to independently control, for the respective systems, the power supply to the winding groups of the plurality of systems.

According to this structure, even if failure occurs in the winding group of one system out of the winding groups of the plurality of systems or in one of the plurality of individual control circuits, the motor can be operated by using the remaining winding group or the remaining individual control circuit.

In the motor controller of the aspect described above, the motor may be configured to generate an assist torque to be applied to a steering mechanism of a vehicle. In this case, the control circuit may be configured to calculate a control amount corresponding to the assist torque to be generated by the motor based on a steering torque.

According to this structure, a change amount of the total control amount (control amount obtained by summing up the individual control amounts of the plurality of systems) relative to a change amount of the steering torque is constant until the individual control amounts of the plurality of systems reach their upper limits at the same timing. Therefore, the assist torque (torque obtained by summing up the torques to be generated by the winding groups of the plurality of systems) can be changed at a constant rate relative to the steering torque. Thus, fluctuation of the steering torque or torque ripples can be suppressed. Further, a driver can attain an excellent steering feel.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a structural diagram illustrating an overview of an electric power steering system on which a motor controller according to one embodiment is mounted;

FIG. 2 is a block diagram of the motor controller of the embodiment;

FIG. 3 is a diagram illustrating a case where a motor current is not limited in the embodiment, in which a graph A illustrates a relationship between a steering torque and a first assist control amount for a first winding group, a graph B illustrates a relationship between the steering torque and a second assist control amount for a second winding group, and a graph C illustrates a relationship between the steering torque and a total assist control amount for a motor;

FIG. 4 is a graph illustrating a relationship between a steering speed (rotation speed of the motor) and a motor torque generated by each of the first winding group and the second winding group when a power supply voltage for a first control circuit decreases in the embodiment;

FIG. 5 is a graph illustrating a relationship between the power supply voltage for each of the first control circuit and a second control circuit and a limitation ratio of the motor torque in the embodiment;

FIG. 6 is a diagram illustrating a comparative example, in which a graph A illustrates a relationship between the steering torque and the assist control amount for the first winding group, a graph B illustrates a relationship between the steering torque and the assist control amount for the second winding group, and a graph C illustrates a relationship between the steering torque and the total assist control amount for the motor;

FIG. 7 is a control block diagram of a first microcomputer and a second microcomputer of the embodiment;

FIG. 8 is a graph illustrating a torque map that defines a relationship between the rotation speed of the motor (steering speed) and the torque generated by the motor in the embodiment; and

FIG. 9 is a diagram illustrating a case where power supply to the first winding group is limited in the embodiment, in which a graph A illustrates a relationship between the steering torque and the assist control amount for the first winding group, a graph B illustrates a relationship between the steering torque and the assist control amount for the second winding group, and a graph C illustrates a relationship between the steering torque and the total assist control amount for the motor.

DETAILED DESCRIPTION OF EMBODIMENTS

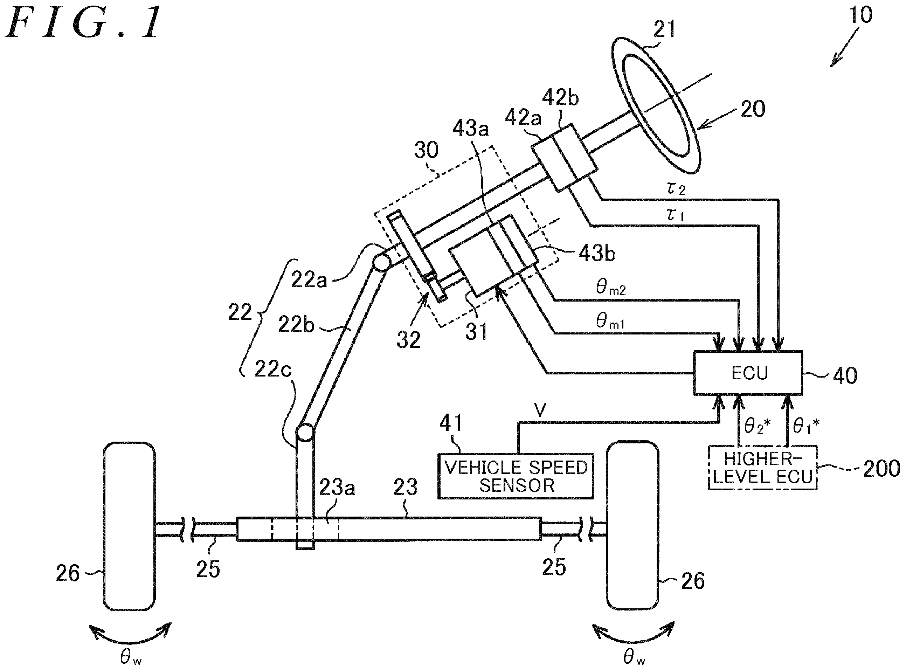

Description is given below of a motor controller according to one embodiment of the present invention, which is applied to an electronic control unit (ECU) of an electric power steering system (hereinafter referred to as "EPS"). As illustrated in FIG. 1, an EPS 10 includes a steering mechanism 20, a steering assist mechanism 30, and an ECU 40. The steering mechanism 20 turns steered wheels based on a driver's steering operation. The steering assist mechanism 30 assists the driver's steering operation. The ECU 40 controls an operation of the steering assist mechanism 30.

The steering mechanism 20 includes a steering wheel 21 and a steering shaft 22. The steering wheel 21 is operated by the driver. The steering shaft 22 rotates together with the steering wheel 21. The steering shaft 22 includes a column shaft 22a, an intermediate shaft 22b, and a pinion shaft 22c. The column shaft 22a is coupled to the steering wheel 21. The intermediate shaft 22b is coupled to the lower end of the column shaft 22a. The pinion shaft 22c is coupled to the lower end of the intermediate shaft 22b. The lower end of the pinion shaft 22c meshes with a rack shaft 23 (to be exact, a portion 23a having rack teeth) extending in a direction intersecting the pinion shaft 22c. Thus, rotational motion of the steering shaft 22 is converted to reciprocating linear motion of the rack shaft 23 through the mesh between the pinion shaft 22c and the rack shaft 23. The reciprocating linear motion is transmitted to right and left steered wheels 26 and 26 via tie rods 25 coupled to respective ends of the rack shaft 23. Thus, steered angles $\theta w$ of the steered wheels 26 and 26 are changed.

The steering assist mechanism 30 includes a motor 31 that is a source of a steering assist force (assist torque). For example, a three-phase brushless motor is employed as the motor 31. The motor 31 is coupled to the column shaft 22a via a speed reducing mechanism 32. The speed reducing mechanism 32 reduces the speed of rotation of the motor 31, and transmits, to the column shaft 22a, a rotational force obtained through the speed reduction. That is, the driver's steering operation is assisted by applying the torque of the motor 31 to the steering shaft 22 as the steering assist force.

The ECU 40 acquires detection results from various sensors provided in a vehicle as pieces of information indicating a driver's request, a traveling condition, and a steering condition (condition amounts), and controls the motor 31 based on the various types of acquired information. Examples of the various sensors include a vehicle speed sensor 41, torque sensors 42a and 42b, and rotation angle sensors 43a and 43b. The vehicle speed sensor 41 detects a vehicle speed V (traveling speed of the vehicle). The torque sensors 42a and 42b are provided on the column shaft 22a. The torque sensors 42a and 42b detect steering torques $\tau_1$ and $\tau_2$ applied to the steering shaft 22. The rotation angle sensors 43a and 43b are provided on the motor 31. The rotation angle sensors 43a and 43b detect rotation angles $\theta_{m1}$ and $\theta_{m2}$ of the motor 31.

The ECU 40 performs vector control for the motor 31 by using the rotation angles $\theta_{m1}$ and $\theta_{m2}$ of the motor 31 that are detected through the rotation angle sensors 43a and 43b. The ECU 40 calculates a target assist torque based on the steering torques $\tau_1$ and $\tau_2$ and the vehicle speed V, and supplies, to the motor 31, driving electric power for causing the steering assist mechanism 30 to generate the calculated target assist torque.

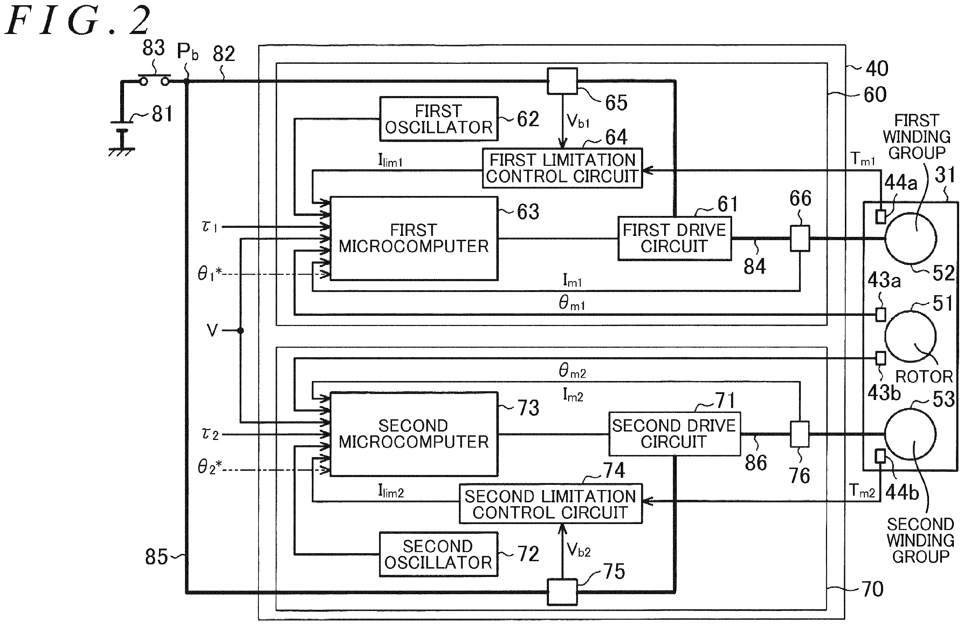

Next, the structure of the motor 31 is described. As illustrated in FIG. 2, the motor 31 includes a rotor 51, and a first winding group 52 and a second winding group 53 that are wound around a stator (not illustrated). The first winding group 52 has a U-phase coil, a V-phase coil, and a W-phase coil. The second winding group 53 also has a U-phase coil, a V-phase coil, and a W-phase coil. The motor 31 includes temperature sensors 44a and 44b in addition to the rotation angle sensors 43a and 43b. The temperature sensor 44a detects the temperature of the first winding group 52. The temperature sensor 44b detects the temperature of the second winding group 53.

Next, the ECU 40 is described in detail.

As illustrated in FIG. 2, the ECU 40 controls power supply to the first winding group 52 and the second winding group 53 for respective systems. The ECU 40 includes a first control circuit 60 and a second control circuit 70. The first control circuit 60 controls the power supply to the first winding group 52. The second control circuit 70 controls the power supply to the second winding group 53.

The first control circuit 60 includes a first drive circuit 61, a first oscillator 62, a first microcomputer 63, and a first limitation control circuit 64. The first drive circuit 61 is supplied with electric power from a direct current (DC) power supply 81 such as a battery mounted on the vehicle. The first drive circuit 61 and the DC power supply 81 (to be exact, its positive terminal) are connected together by a first power supply line 82. The first power supply line 82 is provided with a power switch 83 of the vehicle, such as an ignition switch. The power switch 83 is operated to actuate a traveling drive source of the vehicle (such as an engine). When the power switch 83 is turned ON, the electric power of the DC power supply 81 is supplied to the first drive circuit 61 via the first power supply line 82. The first power supply line 82 is provided with a voltage sensor 65. The voltage sensor 65 detects a voltage $V_{b1}$ of the DC power supply 81. The first microcomputer 63 and the rotation angle sensor 43a are supplied with the electric power of the DC power supply 81 via power supply lines (not illustrated).

The first drive circuit 61 is a pulse width modulation (PWM) inverter in which three legs corresponding to three phases (U, V, W) are connected in parallel. The leg is a basic element including two switching elements such as field effect transistors (FETs) connected in series. The first drive circuit 61 converts DC power supplied from the DC power supply 81 to three-phase alternating current (AC) power such that the switching elements of the respective phases are switched based on a command signal $S_{c1}$ generated by the first microcomputer 63. The three-phase AC power generated by the first drive circuit 61 is supplied to the first winding group 52 via a power supply path 84 for each phase that is formed by a busbar or a cable. The power supply path 84 is provided with a current sensor 66. The current sensor 66 detects a current $I_{m1}$ supplied from the first drive circuit 61 to the first winding group 52.

The first oscillator (clock generation circuit) 62 generates a clock that is a synchronization signal for operating the first microcomputer 63. The first microcomputer 63 executes various types of processing in accordance with the clock generated by the first oscillator 62. The first microcomputer 63 calculates a target assist torque to be generated in the motor 31 based on the steering torque $\tau_1$ detected through the torque sensor 42a and the vehicle speed V detected through the vehicle speed sensor 41, and calculates an assist control amount based on the value of the calculated target assist torque. The assist control amount is a value corresponding to a current amount to be supplied to the motor 31 in order to generate the target assist torque. The first microcomputer 63 calculates a first assist control amount for the first winding group 52 based on the assist control amount. The first assist control amount is a value corresponding to a current amount to be supplied to the first winding group 52, in other words, a torque to be generated by the first winding group 52 in order that the overall motor 31 generate the target assist torque. The first microcomputer 63 calculates a first current command value that is a target value of a current to be supplied to the first winding group 52 based on the first assist control amount.

The first microcomputer 63 generates the command signal $S_{c1}$ (PWM signal) for the first drive circuit 61 by executing current feedback control so that the value of an actual current supplied to the first winding group 52 follows the first current command value. The command signal $S_{c1}$ defines duty ratios of the switching elements of the first drive circuit 61. The duty ratio is a ratio of an ON time of the switching element to a pulse period. The first microcomputer 63 controls energization of the first winding group 52 by using the rotation angle $\theta_{m1}$ of the motor 31 (rotor 51) that is detected through the rotation angle sensor 43a. By supplying a current to the first winding group 52 through the first drive circuit 61 based on the command signal $S_{c1}$, the first winding group 52 generates a torque based on the first assist control amount.

The first limitation control circuit 64 calculates a limitation value $I_{lim1}$ for limiting the current amount to be supplied to the first winding group 52 depending on the voltage $V_{b1}$ of the DC power supply 81 that is detected through the voltage sensor 65 and a heat generation condition of the motor 31 (first winding group 52). The limitation value $I_{lim1}$ is set as an upper limit value of the current amount to be supplied to the first winding group 52 from the viewpoint of suppressing a decrease in the voltage $V_{b1}$ of the DC power supply 81 or protecting the motor 31 from overheating.

When the voltage $V_{b1}$ of the DC power supply 81 that is detected through the voltage sensor 65 is equal to or smaller than a voltage threshold, the first limitation control circuit 64 calculates the limitation value $I_{lim1}$ based on the value of the voltage $V_{b1}$ on each occasion. The voltage threshold is set based on a lower limit value of an assist assurance voltage range of the EPS 10. The first limitation control circuit 64 calculates the limitation value $I_{lim1}$ also when a temperature $T_{m1}$ of the first winding group 52 (or its periphery) that is detected through the temperature sensor 44a is equal to or smaller than a temperature threshold.

When the absolute value of the first assist control amount corresponding to the torque to be generated by the first winding group 52 or the absolute value of the first current command value that is the target value of the current to be supplied to the first winding group 52 in order that the overall motor 31 generate the target assist torque is equal to or smaller than the limitation value $I_{lim1}$, the first microcomputer 63 limits the absolute value of the first assist control amount or the absolute value of the first current command value to the limitation value $I_{lim1}$.

The second control circuit 70 basically has a structure similar to that of the first control circuit 60. That is, the second control circuit 70 includes a second drive circuit 71, a second oscillator 72, a second microcomputer 73, and a second limitation control circuit 74.

The second drive circuit 71 is also supplied with the electric power from the DC power supply 81. In the first power supply line 82, a connection point $P_b$ is provided between the power switch 83 and the first control circuit 60. The connection point $P_b$ and the second drive circuit 71 are connected together by a second power supply line 85. When the power switch 83 is turned ON, the electric power of the DC power supply 81 is supplied to the second drive circuit 71 via the second power supply line 85. The second power supply line 85 is provided with a voltage sensor 75. The voltage sensor 65 detects a voltage $V_{b2}$ of the DC power supply 81.

Three-phase AC power generated by the second drive circuit 71 is supplied to the second winding group 53 via a power supply path 86 for each phase that is formed by a busbar or a cable. The power supply path 86 is provided with a current sensor 76. The current sensor 76 detects a current $I_{m2}$ supplied from the second drive circuit 71 to the second winding group 53.

The second microcomputer 73 calculates a target assist torque to be generated in the motor 31 based on the steering torque $\tau_2$ detected through the torque sensor 42b and the vehicle speed V detected through the vehicle speed sensor 41, and calculates an assist control amount based on the value of the calculated target assist torque. The assist control amount calculated by the second microcomputer 73 is used for a backup. When the first microcomputer 63 is operating properly, the second microcomputer 73 calculates a second assist control amount for the second winding group 53 based on the assist control amount calculated by the first microcomputer 63. The second microcomputer 73 calculates a second current command value that is a target value of a current to be supplied to the second winding group 53 based on the second assist control amount.

The second microcomputer 73 generates a command signal $S_{c2}$ for the second drive circuit 71 by executing current feedback control so that the value of an actual current supplied to the second winding group 53 follows the second current command value. By supplying a current to the second winding group 53 through the second drive circuit 71 based on the command signal $S_{c2}$, the second winding group 53 generates a torque based on the second assist control amount.

The second limitation control circuit 74 calculates a limitation value $I_{lim2}$ for limiting the current amount to be supplied to the second winding group 53 depending on the voltage of the DC power supply 81 that is detected through the voltage sensor 75 and a heat generation condition of the motor 31 (second winding group 53).

Next, a relationship between the steering torque and the assist control amount is described. A maximum value of the current (first assist control amount or first current command value) to be supplied from the first control circuit 60 to the first winding group 52 and a maximum value of the current (second assist control amount or second current command value) to be supplied from the second control circuit 70 to the second winding group 53 are set to the same value. The maximum value of the current to be supplied to each of the first winding group 52 and the second winding group 53 is a half (50%) of a maximum value (100%) of the current corresponding to a maximum torque that can be generated by the motor 31.

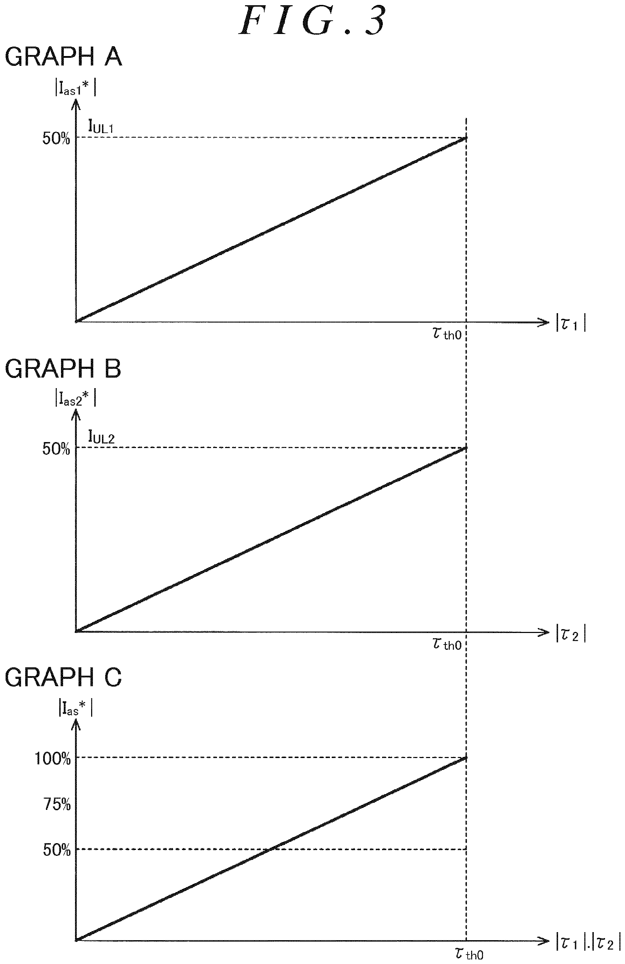

As illustrated in a graph A of FIG. 3, the steering torque $\tau_1$ is plotted on a horizontal axis, and a first assist control amount $I_{as1}{}^*$ is plotted on a vertical axis. Then, a relationship between the steering torque $\tau_1$ and the first assist control amount $I_{as1}{}^*$ is as follows. That is, the absolute value of the first assist control amount $I_{as1}{}^*$ linearly increases as the absolute value of the steering torque $\tau_1$ increases. The absolute value of the first assist control amount $I_{as1}{}^*$ is maximum when the absolute value of the steering torque $\tau_1$ reaches a torque threshold $\tau_{th0}$. The maximum value (absolute value) of the first assist control amount $I_{as1}{}^*$ is a value corresponding to a half (50%) of the maximum torque that can be generated by the motor 31.

As illustrated in a graph B of FIG. 3, the steering torque $\tau_2$ is plotted on a horizontal axis, and a second assist control amount $I_{as2}{}^*$ is plotted on a vertical axis. Then, a relationship between the steering torque $\tau_2$ and the second assist control amount $I_{as2}{}^*$ is as follows. That is, the absolute value of the second assist control amount $I_{as2}{}^*$ linearly increases as the absolute value of the steering torque $\tau_2$ increases. The absolute value of the second assist control amount $I_{as2}{}^*$ is maximum when the absolute value of the steering torque $\tau_2$ reaches the torque threshold $\tau_{th0}$. The maximum value (absolute value) of the second assist control amount $I_{as2}{}^*$ is a value corresponding to a half (50%) of the maximum torque that can be generated by the motor 31.

As illustrated in a graph C of FIG. 3, the steering torques $\tau_1$ and $\tau_2$ are plotted on a horizontal axis, and a total assist control amount $I_{as}{}^*$ obtained by summing up the first assist control amount $I_{as1}{}^*$ and the second assist control amount $I_{as2}{}^*$ is plotted on a vertical axis. Then, a relationship between each of the steering torques $\tau_1$ and $\tau_2$ and the assist control amount $I_{as}{}^*$ is as follows. That is, the absolute value of the total assist control amount $I_{as}{}^*$ linearly increases as the absolute values of the steering torques $\tau_1$ and $\tau_2$ increase. The absolute value of the total assist control amount $I_{as}{}^*$ is maximum when the absolute values of the steering torques $\tau_1$ and $\tau_2$ reach the torque threshold $\tau_{th0}$. The maximum value (absolute value) of the total assist control amount $I_{as}{}^*$ is a value corresponding to the maximum torque (100%) that can be generated by the motor 31.

Thus, the torque generated by the first winding group 52 and the torque generated by the second winding group 53 are basically the same value to keep their balance. The motor 31 generates a torque obtained by summing up the torques of the two systems. However, there is a concern about the occurrence of a situation in which the maximum torque that can be generated by the first winding group 52 and the maximum torque that can be generated by the second winding group 53 differ from each other and lose their balance. For example, the following three situations (A1), (A2), and (A3) are conceivable as the situation in which the maximum torques of the two systems lose their balance.

(A1) Situation in which the power supply voltages supplied to the first drive circuit 61 and the second drive circuit 71 differ from each other though the voltages fall within the assist assurance voltage range, and the driver performs steering at high speed.

(A2) Situation in which the power supply voltage supplied to the first drive circuit 61 or the second drive circuit 71 decreases and the torque to be generated in the first winding group 52 or the second winding group 53 of the system in which the power supply voltage decreases is limited in order to suppress a further decrease in the power supply voltage.

(A3) Situation in which the torque to be generated in the first winding group 52 or the second winding group 53 is limited in order to protect the first winding group 52 or the second winding group 53 from overheating.

In the situations (A1) and (A2), the power supply voltages of the two systems fluctuate due to, for example, variations in the voltages supplied from the DC power supply 81 and an alternator, variations in resistance values of wiring harnesses, or deteriorations of those components.

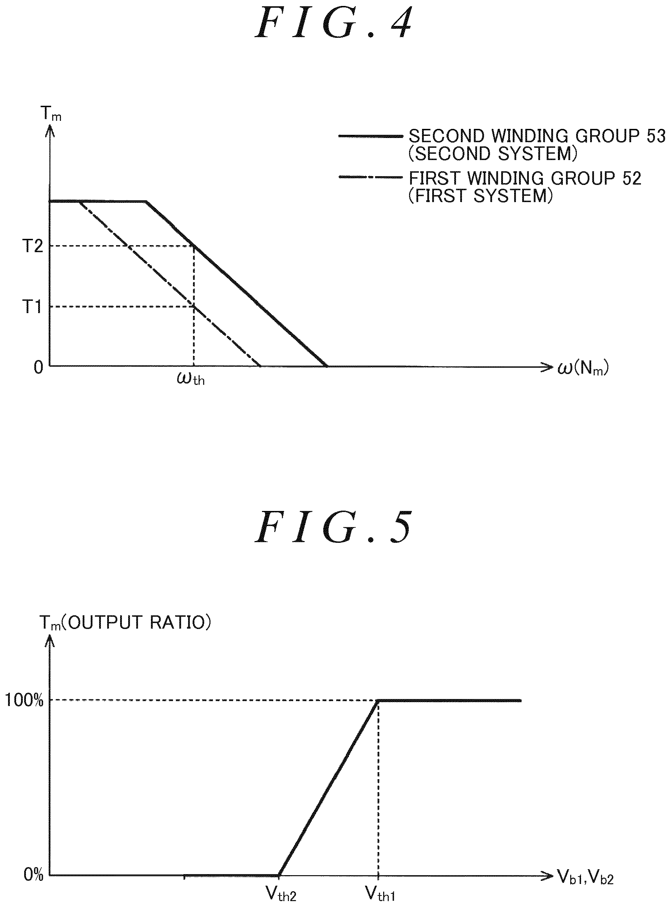

An example of the situation (A1) is as follows. That is, in a relationship between a steering speed $\omega$ (rotation speed of the motor 31) and a torque $T_m$ of the motor 31 as illustrated in a graph of FIG. 4, the torque $T_m$ generated by each of the first winding group 52 and the second winding group 53 decreases as the steering speed $\omega$ increases. For example, if the power supply voltage supplied to the first drive circuit 61 decreases to a value lower than that of the power supply voltage supplied to the second drive circuit 71, the value of a torque T1 that can be generated by the first winding group 52 is smaller than the value of a torque T2 that can be generated by the second winding group 53 when the steering speed is a predetermined value $\omega_{th}$ (> 0).

An example of the situation (A2) is as follows. That is, if the values of the voltages $V_{b1}$ and $V_{b2}$ of the DC power supply 81 that are detected through the voltage sensors 65 and 75 are larger than a first voltage threshold $V_{th1}$ as

illustrated in a graph of FIG. 5, the voltages $V_{b1}$ and $V_{b2}$ are normal values, and the torques to be generated by the first winding group 52 and the second winding group 53 are not limited (output at 100%). If the values of the voltages $V_{b1}$ and $V_{b2}$ are equal to or smaller than the first voltage threshold $V_{th1}$, the torques to be generated by the first winding group 52 and the second winding group 53 are limited depending on the values of the voltages $V_{b1}$ and $V_{b2}$. If the values of the voltages $V_{b1}$ and $V_{b2}$ are larger than a second voltage threshold $V_{th2}$ ($< V_{th1}$) and equal to or smaller than the first voltage threshold $V_{th1}$, the torques to be generated by the first winding group 52 and the second winding group 53 are limited to smaller values as the values of the voltages $V_{b1}$ and $V_{b2}$ decrease. If the values of the voltages $V_{b1}$ and $V_{b2}$ are equal to or smaller than the second voltage threshold $V_{th2}$, the torques to be generated by the first winding group 52 and the second winding group 53 are limited to 0 (zero) (output at 0%).

Next, description is given of a relationship between each of the steering torques $\tau_1$ and $\tau_2$ and the total assist control amount $I_{as}^*$ in the situation in which the maximum torque that can be generated by the first winding group 52 and the maximum torque that can be generated by the second winding group 53 differ from each other and lose their balance. Description is given of an exemplary case where the torque to be generated by the first winding group 52 is limited due to one of the situations (A1) to (A3). By limiting the first assist control amount $I_{as1}^*$, the current amount to be supplied to the first winding group 52 and furthermore the value of the torque to be generated by the first winding group 52 are limited.

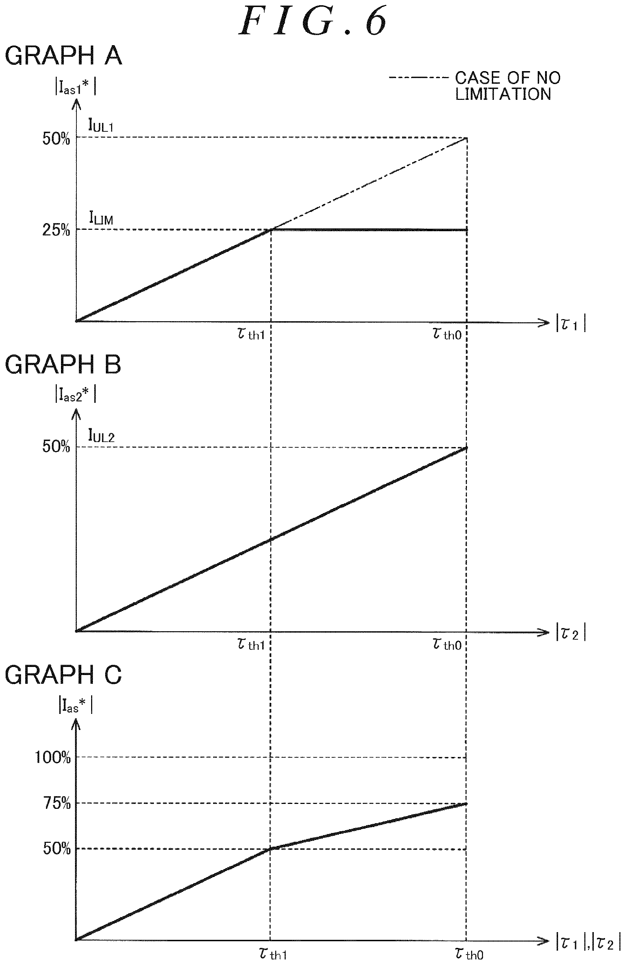

The degree of limitation of the first assist control amount $I_{as1}^*$ varies depending on the steering condition, the power supply voltage, and the heat generation condition of the motor 31. As illustrated in a graph A of FIG. 6, an upper limit value $I_{LIM}$ of the first assist control amount $I_{as1}^*$ is set to a value corresponding to a half of an original upper limit value $I_{UL1}$, that is, 1/4 (25%) of the maximum torque that can be generated by the motor 31. The first assist control amount $I_{as1}^*$ reaches the upper limit value $I_{LIM}$ at a timing when the absolute value of the steering torque $\tau_1$ reaches a torque threshold $\tau_{th1}$ ($< \tau_{th0}$).

As illustrated in a graph B of FIG. 6, an upper limit value of the second assist control amount $I_{as2}^*$ is not limited. Therefore, the second assist control amount $I_{as2}^*$ reaches an upper limit value $I_{UL2}$ at a timing when the absolute value of the steering torque $\tau_2$ reaches the torque threshold $\tau_{th0}$. That is, the situation in which the maximum value of the first assist control amount $I_{as1}^*$ (maximum torque that can be generated by the first winding group 52) and the maximum value of the second assist control amount $I_{as2}^*$ (maximum torque that can be generated by the second winding group 53) differ from each other and lose their balance occurs after the steering torques $\tau_1$ and $\tau_2$ reach the torque threshold $\tau_{th1}$.

As illustrated in a graph C of FIG. 6, until the steering torques $\tau_1$ and $\tau_2$ reach the torque threshold $\tau_{th1}$, the absolute value of the total assist control amount $I_{as}^*$ obtained by summing up the first assist control amount $I_{as1}^*$ and the second assist control amount $I_{as2}^*$ linearly increases as the absolute values of the steering torques $\tau_1$ and $\tau_2$ increase. Also after the steering torques $\tau_1$ and $\tau_2$ reach the torque threshold $\tau_{th1}$, the absolute value of the total assist control amount $I_{as}^*$ linearly increases as the absolute values of the steering torques $\tau_1$ and $\tau_2$ increase. After the steering torques $\tau_1$ and $\tau_2$ reach the torque threshold $\tau_{th1}$, however, the first assist control amount $I_{as1}^*$ is limited to the upper limit value $I_{LIM}$ ($< I_{UL1}$). Therefore, after the absolute values of the steering torques $\tau_1$ and $\tau_2$ reach the torque threshold $\tau_{th1}$, the ratio of the increase amount of the absolute value of the total assist control amount $I_{as}^*$ to the increase amount of the absolute values of the steering torques $\tau_1$ and $\tau_2$ (assist gain) is smaller than that before the absolute values of the steering torques $\tau_1$ and $\tau_2$ reach the torque threshold $\tau_{th1}$. The absolute value of the total assist control amount $I_{as}^*$ is maximum when the absolute values of the steering torques $\tau_1$ and $\tau_2$ reach the torque threshold $\tau_{th0}$. At this time, the maximum value (absolute value) of the total assist control amount $I_{as}^*$ is a value corresponding to 75% of the maximum torque that can be generated by the motor 31.

Since only the first assist control amount $I_{as1}^*$ (torque to be generated by the first winding group 52) reaches the upper limit value at the timing when the steering torques $\tau_1$ and $\tau_2$ reach the torque threshold $\tau_{th1}$, the value of the assist gain changes before and after the steering torques $\tau_1$ and $\tau_2$ reach the torque threshold $\tau_{th1}$. The value of the assist gain after the steering torques $\tau_1$ and $\tau_2$ reach the torque threshold $\tau_{th1}$ is smaller than the value of the assist gain before the steering torques $\tau_1$ and $\tau_2$ reach the torque threshold $\tau_{th1}$.

The assist gain is a value indicating a change rate (slope) of the total assist control amount $I_{as}^*$ relative to the steering torques $\tau_1$ and $\tau_2$. The assist gain is a value obtained by dividing the absolute value of the assist control amount $I_{as}^*$ by the absolute value of each of the steering torques $\tau_1$ and $\tau_2$. Since the total assist control amount $I_{as}^*$ corresponds to a total assist torque to be generated by the motor 31, the assist gain may be a value indicating a change rate of the assist torque relative to the steering torques $\tau_1$ and $\tau_2$.

Due to the change in the assist gain before and after the steering torques $\tau_1$ and $\tau_2$ reach the torque threshold $\tau_{th1}$, there is a concern that the driver may feel discomfort in fluctuation of the steering torques $\tau_1$ and $\tau_2$, torque ripples, or the like. In order to address such a concern, the first microcomputer 63 and the second microcomputer 73 are structured as follows in this embodiment.

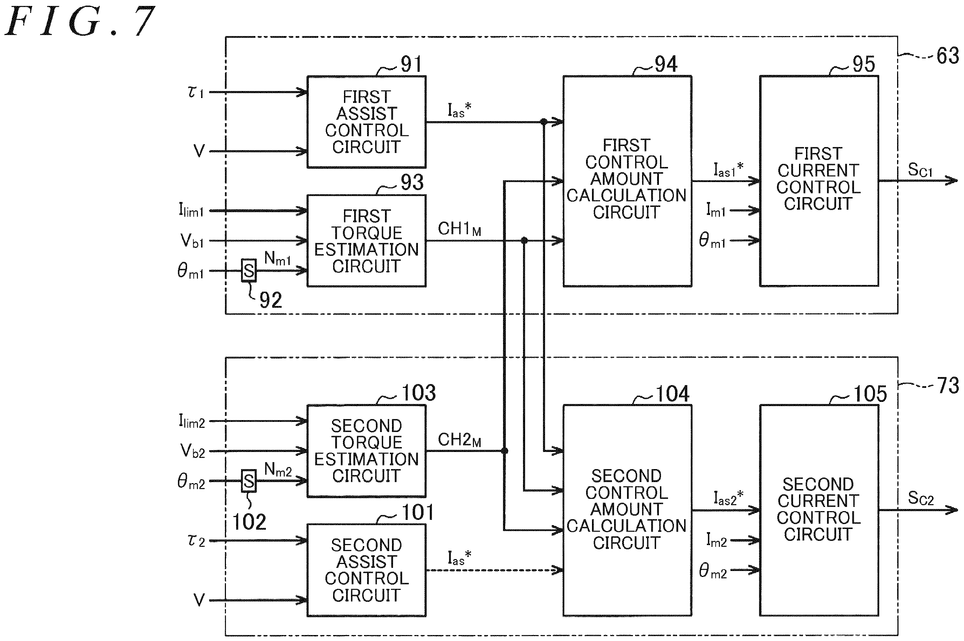

As illustrated in FIG. 7, the first microcomputer 63 includes a first assist control circuit 91, a differentiator 92, a first torque estimation circuit 93, a first control amount calculation circuit 94, and a first current control circuit 95.

The first assist control circuit 91 calculates the assist control amount $I_{as}^*$ based on the steering torque $\tau_1$ and

the vehicle speed V. The assist control amount $I_{as}^*$ corresponds to a total current amount to be supplied to the motor 31 in order to generate a target assist torque having an appropriate magnitude corresponding to the steering torque $\tau_1$ and the vehicle speed V. The first assist control circuit 91 calculates an assist control amount $I_{as}^*$ having a larger value (absolute value) as the absolute value of the steering torque $\tau_1$ increases and as the vehicle speed V decreases.

The differentiator 92 calculates a rotation speed $N_{m1}$ of the motor 31 by differentiating, in terms of time, the rotation angle $\theta_{m1}$ of the motor 31 that is detected through the rotation angle sensor 43a. The rotation speed $N_{m1}$ of the motor 31 is also a condition amount that reflects the steering speed.

The first torque estimation circuit 93 calculates a maximum torque $CH1_M$ that can be generated by the first winding group 52 based on the limitation value $I_{lim1}$ calculated by the first limitation control circuit 64, the voltage $V_{b1}$ of the DC power supply 81 that is detected through the voltage sensor 65, and the rotation speed $N_{m1}$ of the motor 31 that is calculated by the differentiator 92. The first torque estimation circuit 93 calculates the maximum torque $CH1_M$ by using a torque map stored in a storage device (not illustrated) of the first microcomputer 63.

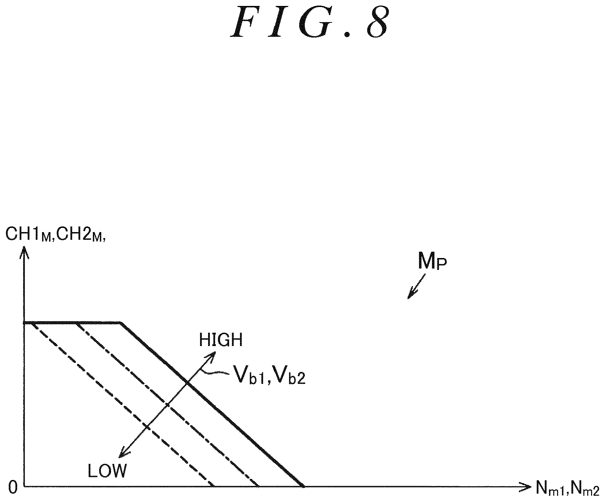

As illustrated in a graph of FIG. 8, a torque map $M_p$ is a three-dimensional map that defines a relationship between the rotation speed $N_{m1}$ of the motor 31 and the maximum torque $CH1_M$ depending on the voltage $V_{b1}$. The torque map $M_p$ is set so that a torque $CH1_M$ having a smaller value is calculated as the rotation speed $N_{m1}$ of the motor 31 increases and as the value of the voltage $V_{b1}$ decreases. Thus, the torque $CH1_M$ can be determined from the torque map $M_p$ if the rotation speed $N_{m1}$ of the motor 31 and the voltage $V_{b1}$ are known.

If the first limitation control circuit 64 calculates the limitation value $I_{lim1}$, the torque $CH1_M$ can be determined by reflecting the limitation value $I_{lim1}$ (for example, a use ratio represented by a percentage or the like) in the torque $CH1_M$ obtained based on the rotation speed $N_{m1}$ of the motor 31 and the voltage $V_{b1}$ by using the torque map $M_p$. Further, it is conceivable that the first limitation control circuit 64 calculates a plurality of limitation values $I_{lim1}$ as in a case where the situations (A2) and (A3) occur simultaneously. In this case, the first torque estimation circuit 93 uses a limitation value $I_{lim1}$ having the smallest value among the plurality of limitation values $I_{lim1}$.

As illustrated in FIG. 7, the first control amount calculation circuit 94 calculates the first assist control amount $I_{as1}^*$ for the first winding group 52 based on the assist control amount $I_{as}^*$ calculated by the first assist control circuit 91, the torque $CH1_M$ calculated by the first torque estimation circuit 93, and a torque $CH2_M$ calculated by the second microcomputer 73 as described later. The torque $CH2_M$ is the maximum torque that can be generated by the second winding group 53. The first control amount calculation circuit 94 calculates the first assist control amount $I_{as1}^*$ by using the following expression (B1).

$$I_{as1}^* = I_{as}^* \times CH1_M / (CH1_M + CH2_M) \qquad (B1)$$

The first current control circuit 95 calculates the first current command value that is the target value of the current to be supplied to the first winding group 52 based on the first assist control amount $I_{as1}^*$. The first current control circuit 95 generates the command signal $S_{c1}$ for the first drive circuit 61 by executing the current feedback control so that the value of the actual current $I_{m1}$ supplied to the first winding group 52 follows the first current command value.

The second microcomputer 73 basically has a structure similar to that of the first microcomputer 63. That is, the second microcomputer 73 includes a second assist control circuit 101, a differentiator 102, a second torque estimation circuit 103, a second control amount calculation circuit 104, and a second current control circuit 105.

The second assist control circuit 101 calculates the backup assist control amount $I_{as}^*$ based on the steering torque $\tau_2$ and the vehicle speed V. The second torque estimation circuit 103 calculates the maximum torque $CH2_M$ that can be generated by the second winding group 53 based on the limitation value $I_{lim2}$ calculated by the second limitation control circuit 74, the voltage $V_{b2}$ of the DC power supply 81 that is detected through the voltage sensor 75, and a rotation speed $N_{m2}$ of the motor 31 that is calculated by the differentiator 102. The second torque estimation circuit 103 also calculates the maximum torque $CH2_M$ by using the torque map $M_p$.

The second control amount calculation circuit 104 calculates the second assist control amount $I_{as2}^*$ for the second winding group 53 based on the assist control amount $I_{as}^*$ calculated by the first assist control circuit 91, the torque $CH1_M$ calculated by the first torque estimation circuit 93, and the torque $CH2_M$ calculated by the second torque estimation circuit 103. The second control amount calculation circuit 104 calculates the second assist control amount $I_{as2}^*$ by using the following expression (B2).

$$I_{as2}^* = I_{as}^* \times CH2_M / (CH1_M + CH2_M) \qquad (B2)$$

The second current control circuit 105 calculates the second current command value that is the target value of the current to be supplied to the second winding group 53 based on the second assist control amount $I_{as2}^*$. The second

current control circuit 105 generates the command signal $S_{c2}$ for the second drive circuit 71 by executing the current feedback control so that the value of the actual current $I_{m2}$ supplied to the second winding group 53 follows the second current command value.

Since the first microcomputer 63 and the second microcomputer 73 are structured as described above, the following actions are attained. Description is given again of the exemplary case where the torque to be generated by the first winding group 52 is limited due to one of the situations (A1) to (A3). By limiting the first assist control amount $I_{as1}*$, the current amount to be supplied to the first winding group 52 and furthermore the value of the torque to be generated by the first winding group 52 are limited.

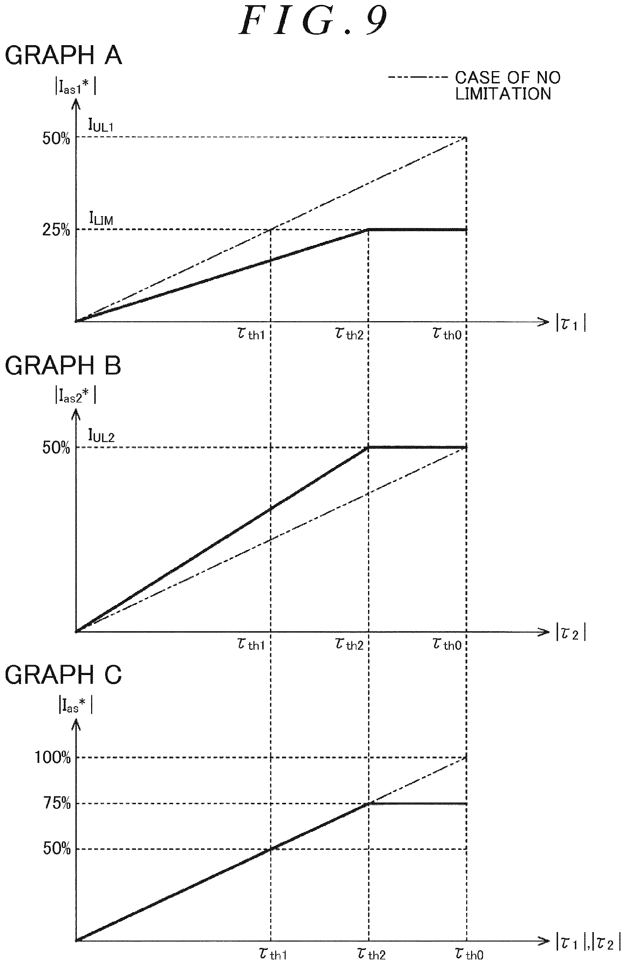

As illustrated in a graph A of FIG. 9, the upper limit value $I_{LIM}$ of the first assist control amount $I_{as1}*$ is set to a value corresponding to a half of the original upper limit value $I_{UL1}$, that is, 1/4 (25%) of the maximum torque that can be generated by the motor 31. As represented by the expression (B1), the assist control amount $I_{as}*$ is allocated as the first assist control amount $I_{as1}*$ for the first winding group 52 based on the ratio (proportion) of the maximum torque $CH1_M$ that can be generated by the first winding group 52 to the maximum torque that can be generated by the motor 31 (= $CH1_M + CH2_M$). Therefore, the ratio (slope) of the increase amount of the first assist control amount $I_{as1}*$ (absolute value) to the increase amount of the steering torque $\tau_1$ (absolute value) is smaller than that in the case where the torque to be generated by the first winding group 52 is not limited. The first assist control amount $I_{as1}*$ reaches the upper limit value $I_{LIM}$ at a timing when the absolute value of the steering torque $\tau_1$ reaches a torque threshold $\tau_{th2}$. A relationship among the magnitudes of the torque thresholds $\tau_{th0}$, $\tau_{th1}$, and $\tau_{th2}$ is represented by the following expression (C).

$$\tau_{th1} < \tau_{th2} < \tau_{th0} \qquad (C)$$

As illustrated in a graph B of FIG. 9, the upper limit value of the second assist control amount $I_{as2}*$ is not limited. As represented by the expression (B2), however, the assist control amount $I_{as}*$ is allocated as the second assist control amount $I_{as2}*$ for the second winding group 53 based on the ratio (proportion) of the maximum torque $CH2_M$ that can be generated by the second winding group 53 to the maximum torque that can be generated by the motor 31 (= $CH1_M + CH2_M$). Therefore, the ratio (slope) of the increase amount of the second assist control amount $I_{as2}*$ (absolute value) to the increase amount of the steering torque $\tau_2$ (absolute value) is larger than that in the case where the torque to be generated by the second winding group 53 is not limited. The second assist control amount $I_{as2}*$ reaches the upper limit value $I_{UL2}$ at a timing when the absolute value of the steering torque $\tau_2$ reaches the torque threshold $\tau_{th2}$.

Since the first assist control amount $I_{as1}*$ and the second assist control amount $I_{as2}*$ are set based on the ratios of the torques $CH1_M$ and $CH2_M$ to the maximum torque that can be generated by the motor 31 (= $CH1_M + CH2_M$), the timing when the first assist control amount $I_{as1}*$ reaches the upper limit value $I_{LIM}$ coincides with the timing when the second assist control amount $I_{as2}*$ reaches the upper limit value $I_{UL2}$. Thus, the change in the total assist control amount $I_{as}*$ relative to the changes in the absolute values of the steering torques $\tau_1$ and $\tau_2$ is as follows.

As illustrated in a graph C of FIG. 9, the absolute value of the total assist control amount $I_{as}*$ is maximum when the absolute values of the steering torques $\tau_1$ and $\tau_2$ reach the torque threshold $\tau_{th2}$. At this time, the maximum value (absolute value) of the total assist control amount $I_{as}*$ is a value corresponding to 75% of the maximum torque that can be generated by the motor 31. Until the absolute values of the steering torques $\tau_1$ and $\tau_2$ reach the torque threshold $\tau_{th2}$, the ratio (slope) of the increase amount of the assist control amount $I_{as}*$ (absolute value) to the increase amount of the steering torques $\tau_1$ and $\tau_2$ (absolute values) is equal to that in the case where the torque to be generated by the first winding group 52 is not limited.

That is, the value of the assist gain (slope) is kept constant by controlling the first assist control amount $I_{as1}*$ and the second assist control amount $I_{as2}*$ so that the timing when the first assist control amount $I_{as1}*$ reaches the upper limit value $I_{LIM}$ coincides with the timing when the second assist control amount $I_{as2}*$ reaches the upper limit value $I_{UL2}$. Since the value of the assist gain does not change, the fluctuation of the steering torques $\tau_1$ and $\tau_2$ can be suppressed. Further, exacerbation of the torque ripples and furthermore deterioration of noise and vibration (NV) characteristics can be suppressed.

According to this embodiment, the following effects can be attained. (1) The upper limit of the first assist control amount $I_{as1}*$ for the first winding group 52 or the second assist control amount $I_{as2}*$ for the second winding group 53 may be limited to a value smaller than the original upper limit. In this case as well, the ECU 40 calculates the first assist control amount $I_{as1}*$ and the second assist control amount $I_{as2}*$ so that the first assist control amount $I_{as1}*$ and the second assist control amount $I_{as2}*$ reach their upper limits at the same timing relative to the changes in the absolute values of the steering torques $\tau_1$ and $\tau_2$ (that is, the target assist torque).

Therefore, even if the upper limit of the first assist control amount $I_{as1}*$ or the second assist control amount $I_{as2}*$ is limited to the value smaller than the original upper limit, there is no such case that only the limited first assist control amount $I_{as1}*$ or the limited second assist control amount $I_{as2}*$ first reaches the upper limit. Thus, the total assist

control amount $I_{as}*$ obtained by summing up the first assist control amount $I_{as1}*$ and the second assist control amount $I_{as2}*$ can be changed at a constant rate relative to the changes in the absolute values of the steering torques $\tau_1$ and $\tau_2$ until the first assist control amount $I_{as1}*$ and the second assist control amount $I_{as2}*$ reach their upper limits at the same timing. Furthermore, the motor torque obtained by summing up the torques to be generated by the first winding group 52 and the second winding group 53 can be changed at a constant rate.

Thus, the fluctuation of the steering torques $\tau_1$ and $\tau_2$ or the torque ripples can be suppressed. Further, the driver can attain an excellent steering feel.

(2) As represented by the expressions (B1) and (B2), the ECU 40 calculates the maximum torque $CH1_M$ that can be generated in the first winding group 52 and the maximum torque $CH2_M$ that can be generated in the second winding group 53. Further, the ECU 40 calculates, for the respective systems, the ratios of the maximum torques $CH1_M$ and $CH2_M$ to the total torque ($CH1_M + CH2_M$) obtained by summing up the maximum torques $CH1_M$ and $CH2_M$. The ECU 40 calculates the first assist control amount $I_{as1}*$ and the second assist control amount $I_{as2}*$ by allocating the assist control amount $I_{as}*$ at the calculated ratios of the respective systems.

Thus, even if the upper limit of the first assist control amount $I_{as1}*$ or the second assist control amount $I_{as2}*$ is limited to the value smaller than the original upper limit, the first assist control amount $I_{as1}*$ and the second assist control amount $I_{as2}*$ reach their upper limits at the same timing relative to the changes in the absolute values of the steering torques $\tau_1$ and $\tau_2$.

(3) The ECU 40 calculates the maximum torques $CH1_M$ and $CH2_M$ that can be generated in the respective systems by using the torque map $M_p$ that defines the relationship between each of the rotation speeds $N_{m1}$ and $N_{m2}$ of the motor 31 and the torque that can be generated by the motor 31. According to this structure, the ECU 40 can easily determine the maximum torques $CH1_M$ and $CH2_M$ that can be generated in the respective systems based on the rotation speeds $N_{m1}$ and $N_{m2}$ of the motor 31.

(4) The ECU 40 includes the first control circuit 60 and the second control circuit 70 configured to independently control the power supply to the first winding group 52 and the second winding group 53 for the respective systems. Therefore, even if failure occurs in the first winding group 52 or the second winding group 53 or in the first control circuit 60 or the second control circuit 70, the motor 31 can be operated by using the remaining normal winding group or the remaining normal control circuit. Thus, the reliability of the operation of the motor 31 can be increased.

This embodiment may be modified as follows. In this embodiment, the ECU 40 calculates, for the respective systems, the maximum torques $CH1_M$ and $CH2_M$ that can be generated by the first winding group 52 and the second winding group 53 by using the torque map $M_p$. The ECU 40 may calculate the maximum torques $CH1_M$ and $CH2_M$ by using mathematical expressions or the like.

In this embodiment, the ECU 40 includes the first control circuit 60 and the second control circuit 70 independent of each other. Depending on product specifications or the like, for example, the first microcomputer 63 and the second microcomputer 73 may be constructed as a single microcomputer.

In recent years, an automated driving system has been developed actively. The automated driving system achieves an automated driving function in which the system performs driving in substitution. The automated driving system includes a cooperative control system such as advanced driver assistance systems (ADAS) configured to assist the driver in his/her driving operation in order to further improve the safety or convenience of the vehicle. When the automated driving system is mounted on the vehicle, cooperative control of the ECU 40 and controllers of other on-board systems is performed in the vehicle. The cooperative control is a technology of controlling motion (behavior) of a vehicle in cooperation between controllers of a plurality of types of on-board system.

As indicated by long dashed double-short dashed lines in FIG. 1, for example, a higher-level ECU (ADAS-ECU) 200 is mounted on the vehicle. The higher-level ECU 200 collectively controls the controllers of various on-board systems. The higher-level ECU 200 determines an optimum control method based on the condition of the vehicle on each occasion, and commands individual control over various on-board controllers based on the determined control method. The higher-level ECU 200 intervenes in the control executed by the ECU 40. The higher-level ECU 200 switches ON and OFF its automated driving control function through an operation of a switch (not illustrated) provided on a driver's seat side or the like.

When the automated driving control function of the higher-level ECU 200 is turned ON, the higher-level ECU 200 executes the operation for the steering wheel 21, and the ECU 40 executes steering operation control (automated steering control) for turning the steered wheels 26 and 26 through control over the motor 31 based on a command from the higher-level ECU 200. For example, the higher-level ECU 200 calculates steered angle command values $\theta_1*$ and $\theta_2*$ as command values for causing the vehicle to travel along a target lane. The steered angle command values $\theta_1*$ and $\theta_2*$ are target values of the steered angle $\theta w$ (angles to be added to the current steered angle $\theta w$) necessary for causing the vehicle to travel along the lane based on the traveling condition of the vehicle on each occasion, or target values of a condition amount that reflects the steered angle $\theta w$ (for example, a pinion angle that is a rotation angle of the pinion shaft 22c). The ECU 40 controls the motor 31 by using the steered angle command values $\theta_1{}^*$ and $\theta_2{}^*$ calculated by the higher-level ECU 200.

As indicated by long dashed double-short dashed lines in FIG. 2, the steered angle command value $\theta_1{}^*$ is given to the first microcomputer 63. The steered angle command value $\theta_2{}^*$ is given to the second microcomputer 73. The first microcomputer 63 calculates the first current command value that is the target value of the current to be supplied to the first winding group 52 by executing angle feedback control so that the actual steered angle $\theta$w follows the steered angle command value $\theta_1{}^*$. The second microcomputer 73 calculates the second current command value that is the target value of the current to be supplied to the second winding group 53 by executing angle feedback control so that the actual steered angle $\theta$w follows the steered angle command value $\theta_2{}^*$. The actual steered angle $\theta$w can be calculated based on the rotation angles $\theta_{m1}$ and $\theta_{m2}$ of the motor 31 that are detected through the rotation angle sensors 43a and 43b.

The required torque to be generated in the motor 31 is normally covered by the torque generated by the first winding group 52 and the torque generated by the second winding group 53 in halves (50%). The two steered angle command values $\theta_1{}^*$ and $\theta_2{}^*$ are basically set to the same value normally. If failure occurs in the winding group of one of the two systems (52, 53), the motor 31 continues to operate through the winding group of the remaining normal system. In this case, the higher-level ECU 200 may calculate a steered angle command value suited to control the motor 31 through the winding group of the remaining normal system.

In this embodiment, the power supply to the winding groups of the two systems (52, 53) is controlled independently. If the motor 31 includes winding groups of three or more systems, power supply to the winding groups of the three or more systems may be controlled independently. In this case, it is preferable that the ECU 40 include as many control circuits as the systems. For example, if the motor 31 includes winding groups of three systems, control circuits of the respective systems calculate individual assist control amounts $I_{as1}{}^*$, $I_{as2}{}^*$, and $I_{as3}{}^*$ for the first to third winding groups based on the following expressions (D1) to (D3).

$$I_{as1}{}^* = I_{as}{}^* \times CH1_M / (CH1_M + CH2_M + CH3_M) \qquad (D1)$$

$$I_{as2}{}^* = I_{as}{}^* \times CH2_M / (CH1_M + CH2_M + CH3_M) \qquad (D2)$$

$$I_{as3}{}^* = I_{as}{}^* \times CH3_M / (CH1_M + CH2_M + CH3_M) \qquad (D3)$$

In the expressions, "$CH3_M$" represents a maximum torque that can be generated by the third winding group. Even if the motor 31 includes winding groups of four or more systems, individual assist control amounts for the winding groups of the respective systems can be calculated based on a concept similar to those in the cases of the two systems or the three systems.

In this embodiment, the EPS 10 of the type in which the torque of the motor 31 is transmitted to the steering shaft 22 (column shaft 22a) is taken as an example. The type of the EPS 10 may be a type in which the torque of the motor 31 is transmitted to the rack shaft 23.

In this embodiment, the motor controller is applied to the ECU 40 configured to control the motor 31 of the EPS 10, but may be applied to a controller of a motor for use in apparatuses other than the EPS 10.

**Claims**

1.  A motor controller, comprising a control circuit configured to calculate a control amount corresponding to a torque to be generated by a motor including winding groups of a plurality of systems, and independently control, for the respective systems, power supply to the winding groups of the plurality of systems based on individual control amounts obtained by allocating the calculated control amount for the respective systems, wherein
    the control circuit is configured to calculate the individual control amounts of the plurality of systems so that the individual control amounts of the plurality of systems reach their upper limits at the same timing relative to a change in the torque to be generated by the motor.

2.  The motor controller according to claim 1, wherein the control circuit is configured to:

    calculate, for the respective systems, maximum torques to be generated in the winding groups of the plurality of systems;

calculate, for the respective systems, ratios of the maximum torques to a total torque obtained by summing up the maximum torques; and
calculate the individual control amounts of the respective systems by allocating the control amount at the calculated ratios of the respective systems.

3. The motor controller according to claim 2, wherein the control circuit is configured to calculate the maximum torques to be generated in the respective systems based on a map that defines a relationship between a rotation speed of the motor and the torque of the motor.

4. The motor controller according to any one of claims 1 to 3, wherein the control circuit includes as many individual control circuits as the systems, the individual control circuits being configured to independently control, for the respective systems, the power supply to the winding groups of the plurality of systems.

5. The motor controller according to any one of claims 1 to 4, wherein
the motor is configured to generate an assist torque to be applied to a steering mechanism of a vehicle, and
the control circuit is configured to calculate a control amount corresponding to the assist torque to be generated by the motor based on a steering torque.

FIG.1

EP 3 597 508 A2

# FIG.2

EP 3 597 508 A2

# *F I G . 3*

GRAPH A

GRAPH B

GRAPH C

# FIG.4

# FIG.5

# *FIG.6*

## GRAPH A

$|I_{as1}*|$

------- CASE OF NO
LIMITATION

50% $I_{UL1}$

25% $I_{LIM}$

$\tau_{th1}$　$\tau_{th0}$　$|\tau_1|$

## GRAPH B

$|I_{as2}*|$

50% $I_{UL2}$

$\tau_{th1}$　$\tau_{th0}$　$|\tau_2|$

## GRAPH C

$|I_{as}*|$

100%

75%

50%

$\tau_{th1}$　$\tau_{th0}$　$|\tau_1|,|\tau_2|$

*FIG.7*

EP 3 597 508 A2

# FIG.8

CH1$_M$,CH2$_M$,

M$_P$

HIGH

V$_{b1}$,V$_{b2}$

LOW

0

N$_{m1}$,N$_{m2}$

# *FIG.9*

## GRAPH A

## GRAPH B

## GRAPH C

**EP 3 597 508 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011195089 A